# EUROPÄISCHE PATENTSCHRIFT

(11) **EP 0 692 686 B1**
(45) Veröffentlichungstag und Bekanntmachung des Hinweises auf die Patenterteilung: **29.10.2003**
(21) Anmeldenummer: 95110198.9
(22) Anmeldetag: 30.06.1995
(51) Int. Cl.: F24J 2/04

(54) **Fassadenkonstruktion in zweischaliger Bauweise**
Double wall façade
Façade à double paroi

(30) Priorität: 12.07.1994 DE 4424524
(43) Veröffentlichungstag der Anmeldung: 17.01.1996
(73) Patentinhaber: NORSK HYDRO ASA, 0257 Oslo 2 (NO)
(72) Erfinder: Schulz, Harald, Dr., D-86381 Krumbach (DE)
(74) Vertreter: Dziewior, Joachim

(56) Entgegenhaltungen:
- EP-A- 0 555 658
- DE-A- 3 026 635
- FR-A- 2 347 628
- GB-A- 2 054 004
- US-A- 4 658 806

## Beschreibung

Die Erfindung betrifft eine Fassadenkonstruktion in zweischaliger Bauweise, mit einer Innenfassade, einer Außenfassade sowie einem zwischen der Innen- und der Außenfassade liegenden Fassadenzwischenraum, wobei die mit transpareenten Bereichen versehene Innenfassade in Form einer.Metallfassade, einer Ziegelwand mit Lochfenstern, einer Festverglasung, auch mit zu öffnenden Fenstern, ausgebildet und der Fassadenzwischenraum mit Luft gefüllt bzw. von Luft durchströmt ist, sowie eine Sonnenschutzeinrichtungen vorgesehen ist.

Derartige Fassadenkonstruktionen sind aus der Praxis bekannt. Sie gewährleisten im Winter eine gute Wärmedämmung, eine passive Sonnenenergienutzung sowie u. U. auch eine aktive Sonnenenergienutzung durch Transport der im Fassadenzwischenraum erwärmten Luft aus den südwestlichen Bereichen des Gebäudes zu den nordöstlichen Bereichen hin.

Aus der FR-A-2 347 628 ist ein Verfahren bekannt, das es erlaubt, auf aktive Weise Solarenergie zu nutzen. Dazu ist vorgesehen, bei Tag warme Luft ins Innere des Gebäudes einzuleiten indem die Wärme der durch die Scheiben einfallenden und die dahinterliegende Wand aufheizenden Sonnenstrahlung über die Luftströmung ins Gebäudeinnere transportiert wird. Dazu sind sowohl zur Außen- wie zur Innenseite mündende Öffnungen für die Luftströmung vorgesehen. Bei Nacht kann dagegen eine Wärmeabgabe aus dem Gebäudeinneren nach draußen mittels eines Vorhangs verhindert werden. Eine ähnlich arbeitende Klimatisierungsanlage ist aus der EP-A1-0 555 658 bekannt, wobei dort zur Aufheizung der Luft Absorptionsjalousien vorgesehen sind.

Bei diesen bekannten Anordnungen wird im Sommer ein vergleichsweise guter Sonnenschutz erreicht, wobei die Sonnenschutzeinrichtungen nicht der Witterung ausgesetzt sind und somit eine längere Haltbarkeit aufweisen sowie einer geringeren Verschmutzung ausgesetzt sind.

Nachteilig bei derartigen Fassadenkonstruktionen ist jedoch das Risiko von Kondensatbildung an der Außenfassade im Winter sowie Überhitzungserscheinungen im Sommer in der Art eines Treibhauseffektes, der selbst mit den Sonnenschutzeinrichtungen nur unzureichend beherrschbar ist, da die Sonnenenergie hierbei zwangsläufig bis hinter die Außenfassade vordringt.

Der Erfindung liegt die Aufgabe zugrunde, eine Fassadenkonstruktion der eingangs genannten Art so zu verbessern, daß Kondensatbildungen im Winter an der Außenfassade sowie Überhitzungen im Sommer ausgeschlossen oder zumindest verringert werden.

Diese Aufgabe wird nach der Erfindung dadurch gelöst, daß die Außenfassade ihrerseits wenigstens zweischalig ausgebildet ist, wobei die Sonnenschutzeinrichtungen zwischen den Schalen der Außenfassade angeordnet sind.

Der durch die Erfindung erreichte Vorteil besteht im wesentlichen darin, daß Kondensatbildungen nicht im Fassadenzwischenraum, sondern allenfalls zwischen den Schalen der Außenfassade auftreten können, wo sie aber wiederum durch geeignete Maßnahmen gemindert oder sogar beseitigt werden können. Treibhauseffekte im Sommer werden dadurch verhindert, daß die eingestrahlte Sonnenenergie - durch gegebenenfalls zusätzliche Maßnahmen noch verstärkt - daran gehindert wird, bis in den Fassadenzwischenraum vorzudringen.

In bevorzugter Ausführungsform der Erfindung ist die Außenfassade von die Sonnenschutzeinrichtungen in sich aufnehmenden Glasscheiben gebildet, wobei die äußere Schale aus Klarglas und die innere Schale ebenfalls aus Klarglas oder aus Wärmeschutzglas besteht. Die Verwendung von Wärmeschutzglas für die innere Schale sorgt für einen verstärkten Wärmeschutz sowohl im Sommer wie auch im Winter.

In einer ersten vorteilhaften Ausführungsform der Erfindung sind die Glasscheiben als Isolierglas mit zwischen sich abgeschlossenem Luftvolumen ausgebildet. Soweit hier insbesondere bei großflächigen Glasscheiben starke Beanspruchungen unter thermischer Wechsellast des Scheibenzwischenraumes auftreten, kann es sich nach einer zweiten vorteilhaften Ausführungsform der Erfindung empfehlen, daß die die Außenfassade bildenden Glasscheiben zwischen sich ein offenes luftdurchströmtes System bilden. Hier ist es als vorteilhaft anzusehen, wenn die Glasscheiben an ihrem unteren und oberen Rand mit Lufteintritts- bzw. Luftaustrittsöffnungen versehen sind. Die Lufteintritts- bzw. Luftaustrittsöffnungen münden - jedenfalls im Sommer - vorteilhafterweise zur Außenseite der Fassade hin. Es besteht jedoch - insbesondere für den Betrieb im Winter - auch die Möglichkeit, die unten eindringende Luft (Zuluft) über Klappen oder dergl. oben (als erwärmte Fortluft) in den Fassadenzwischenraum zu führen.

Sofern die freie Konvektion nicht ausreichend ist, kann eine Zwangsdurchströmung dadurch erreicht werden, daß die Lufteintritts- und/oder die Luftaustrittsöffnung mit einem Ventilator versehen ist. Eine Regelung des Luftstroms kann hierbei durch an den Lufteintritts- bzw. Luftaustrittsöffnungen angeordnete Klappen erfolgen.

Es besteht jedoch nach einer weiteren vorteilhaften Ausführungsform der Erfindung auch die Möglichkeit, daß die die Außenfassade bildenden Glasscheiben zwischen sich ein abgeschlossenes, jedoch druckentspanntes Luftvolumen einschließen. Dann tritt zwischen den beiden Schalen der Außenfassade praktisch keine Konvektion mit der Umgebung mehr auf, gleichwohl können unter thermischer Wechsellast keine mechanischen Belastungen auftreten. Hierbei besteht insbesondere die Möglichkeit, daß die die Außenfassade bildenden Glasscheiben über Abstandshalter beabstandet sind, wobei die Abstandshalter Belüftungsöffnungen mit eingesetzten Staubfiltern aufweisen.

Bei diesen Ausführungsformen ist es weiterhin von Vorteil, wenn die innenseitige Glasscheibe der Außenfassade zu Reinigungszwecken oder dergl. öffenbar ist. Dies erlaubt es auch, eventuell notwendige Wartungen oder Reparaturen an den Sonnenschutzeinrichtungen einfach vornehmen zu können.

Für besonders hohe Anforderungen an Wärmedämmung kann die innenseitige Glasscheibe der Außenfassade als Isolierglasscheibe ausgebildet sein.

Die Sonnenschutzeinrichtungen können im Rahmen der Erfindung von Jalousien, Raffstoren, Folienrollos oder dergl. gebildet sein.

Die Sonnenschutzeinrichtungen sind an ihrer zur Fassadenaußenseite weisenden Fläche wahlweise die eingestrahlte Sonnenenergie absorbierend oder reflektierend ausgebildet. Im Winter können somit die absorbierenden, im Sommer dagegen die reflektierenden Eigenschaften ausgenutzt werden. Um dies zu realisieren, können die Sonnenschutzeinrichtungen vorteilhafterweise von zwei getrennten, wahlweise zur Anwendung kommenden Folien gebildet sein, deren eine die absorbierenden und deren andere die reflektierenden Eigenschaften aufweist.

Es besteht jedoch auch die Möglichkeit, die Sonnenschutzeinrichtungen als Jalousie auszubilden, die gewendet werden kann und deren eine Seite die absorbierenden und deren andere Seite die reflektierenden Eigenschaften aufweist.

Im folgenden wird die Erfindung an in der Zeichnung dargestellten Ausführungsbeispielen näher erläutert; es zeigen:
- Fig. 1: eine koventionelle Fassadenkonstruktion in zweischaliger Bauweise,
- Fig. 2: eine erste Ausführungsform einer Fassadenkonstruktion nach der Erfindung in nur ausschnittsweiser Darstellung gemäß Fig. 1,
- Fig. 3: in den Teilfiguren a) und b) zwei Ausführungsformen mit belüfteter Außenfassade, wobei lediglich die Außenfassade dargestellt ist,
- Fig. 4: eine andere Ausführungsform in der Fig. 3 entsprechender Darstellung,
- Fig. 5: eine weitere Ausführungsform, ebenfalls in der Fig. 3 entsprechender Darstellung.

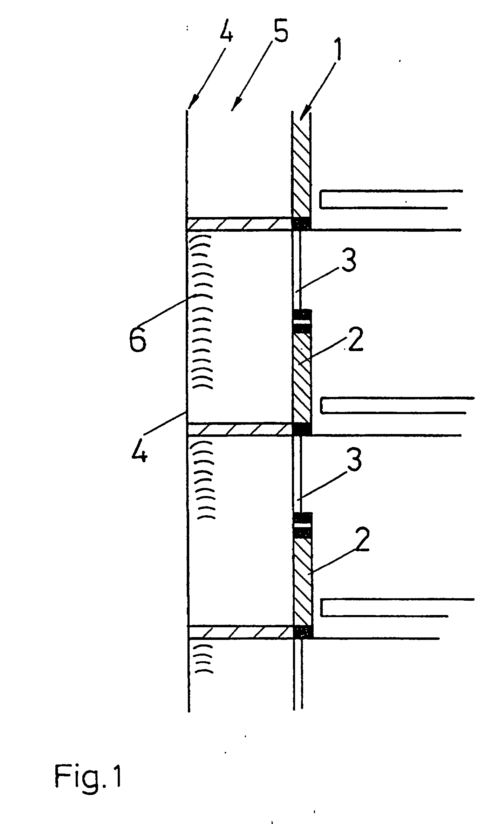

Die in der Zeichung dargestellte Fassadenkonstruktion besitzt eine zweischalige Bauweise und besteht im wesentlichen aus einer Innenfassade 1, die im einzelnen in Form einer Metallfassade, einer Ziegelwand mit Lochfenstern, einer Festverglasung oder in ähnlicher Weise ausgebildet sein kann, wobei auch vorgesehen sein kann, daß die Innenfassade mit zu öffnenden Fenstern versehen ist. In Fig. 1, die eine Fassadenkonstruktion nach dem Stand der Technik wiedergibt, weist die Innenfassade 1 je Stockwerk eine Brüstung 2 sowie ein Fenster 3 auf, das auch als Festverglasung ausgebildet sein kann.

Weiter umfaßt die Fassadenkonstruktion eine in der Fig. 1 nur angedeutete Außenfassade 4 sowie einen zwischen der Innen- und der Außenfassade 1, 4 liegenden Fassadenzwischenraum 5 auf. Der Fassadenzwischenraum 5 ist mit Luft gefüllt bzw. von Luft durchströmt und kann in hier nicht näher interessierender Weise mit klimatisierenden Geräten bzw. Anlagen in Verbindung stehen.

Schließlich umfaßt die Fassadenkonstruktion im Bereich zwischen der Innen- und der Außenfassade 1, 4 integrierte Sonnenschutzeinrichtungen 6.

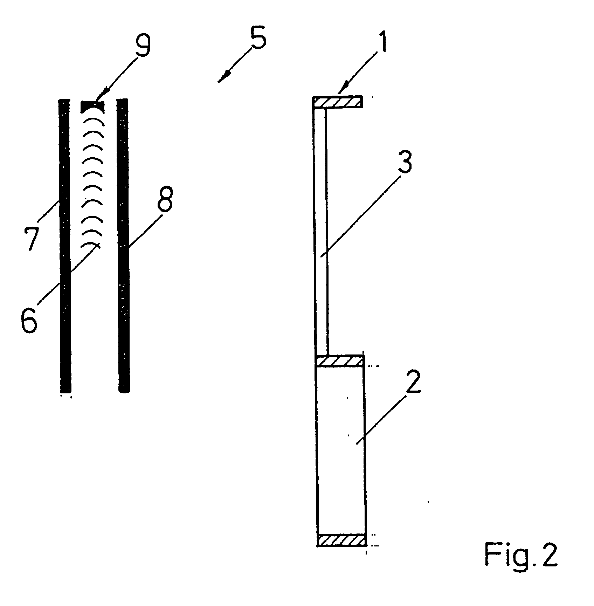

Gemäß der Erfindung ist die Außenfassade 4, wie sich dies aus den Fig. 2 bis 5 ergibt, wenigstens zweischalig ausgebildet, wobei die Sonnenschutzeinrichtungen 6 zwischen den Schalen der Außenfassade 4 angeordnet sind.

Im einzelnen ist die Außenfassade 4 von die Sonnenschutzeinrichtungen 6 in sich aufnehmenden Glasscheiben 7, 8 gebildet, wobei die äußere Scheibe 7 als Klarglas besteht. Die innere Scheibe 8 kann entweder ebenfalls aus Klarglas oder aber aus Wärmeschutzglas bestehen. Im letzteren Fall wird die in den Zwischenraum 9 zwischen der äußeren 7 und der inneren Scheibe 8 eingetretene Sonnenenergie in verstärktem Maße daran gehindert, in den Fassadenzwischenraum 5 überzutreten, wodurch im Sommer ein erhöhter Wärmeschutz zur Vermeidung von Überhitzung erreicht wird.

Die die Außenfassade 4 bildenden Glasscheiben 7, 8 können dabei in in der Zeichnung nicht dargestellter Weise als Isolierglas mit zwischen sich abgeschlossenem Luftvolumen ausgebildet sein, wodurch jedoch eine starke mechanische Beanspruchung der Glasscheiben 7, 8 unter thermischer Wechsellast auftreten kann.

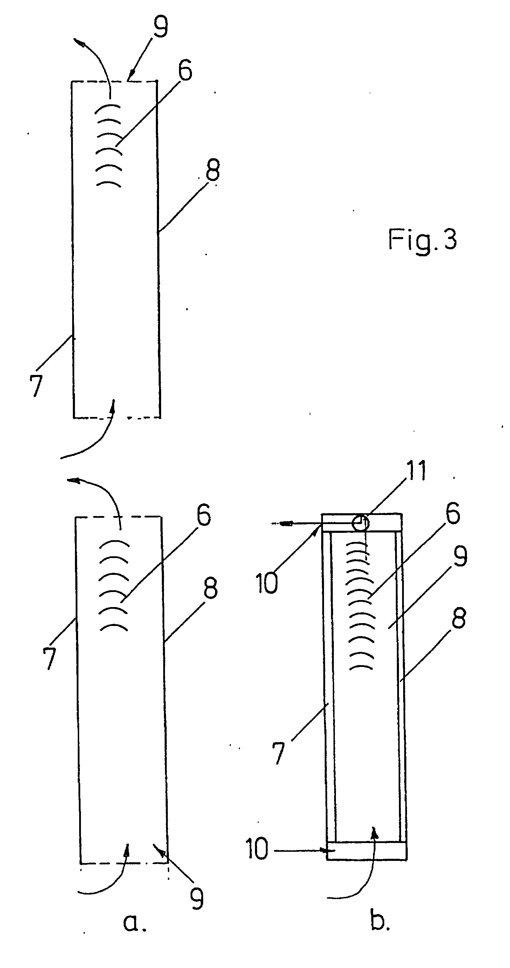

Häufig wird daher die in Fig. 3 dargestellte Lösung zur Anwendung kommen, bei der die die Außenfassade 4 bildenden Glasscheiben 7, 8 zwischen sich ein offenes, luftdurchströmtes System bilden. Hierbei sind die Glasscheiben 7, 8 an ihrem unteren und oberen Rand mit Lufteintritts- bzw. Luftaustrittsöffnungen 10 versehen. Diese Öffnungen ermöglichen eine freie Konvektion zwischen den Glasscheiben 7, 8, wobei die Lufteintritts- bzw. Luftaustrittsöffungen 10 zur Außenseite der Fassade hin münden.

Es besteht jedoch auch die in Fig. 3b nur schematisch dargestellte Möglichkeit, die Luftaustrittsöffnung 10 mit einem Ventilator 11 zu versehen, wobei zusätzlich beispielsweise an der Lufteintrittsöffnung 10 in der Zeichnung nicht näher dargestellte Klappen vorgesehen sein können, die eine Regelung der einströmenden Zuluft ermöglichen.

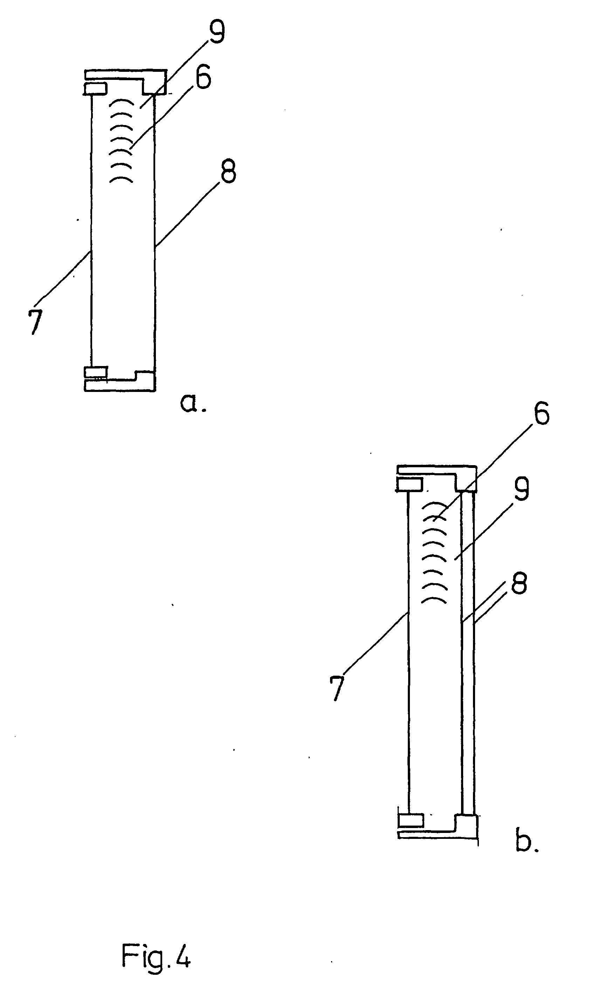

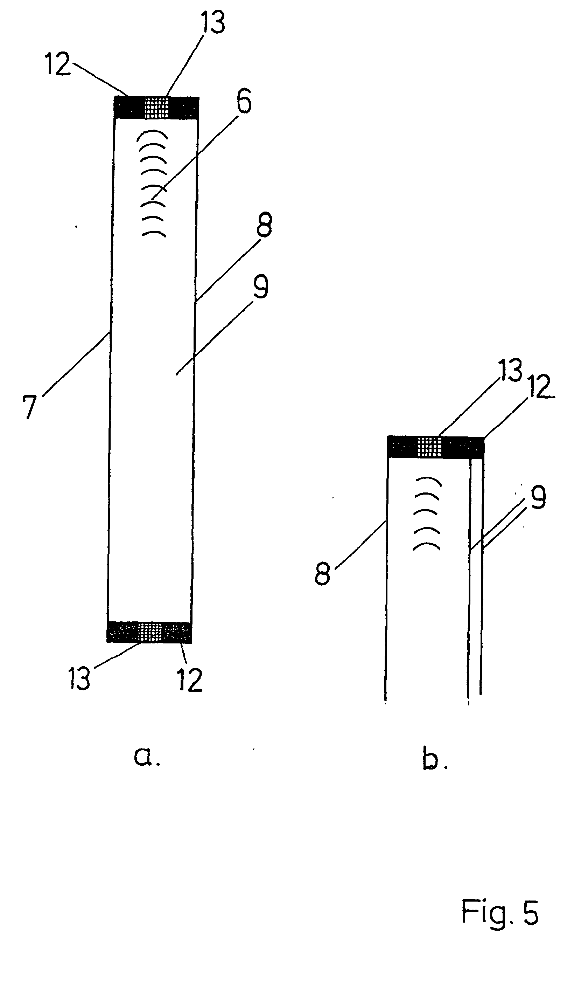

Schließlich können - soweit eine Luftkonvektion nicht gewünscht wird - die die Außenfassade 4 bildenden Glasscheiben 7, 8 zwischen sich ein abgeschlossenes, jedoch druckentspanntes Luftvolumen einschließen, wie dies in den Ausführungsbeispielen nach den Fig. 4 und 5 der Fall ist. In Fig. 5 sind dabei die die Außenfassade bildenden Glasscheiben über Abstandshalter 12 beabstandet, wobei die Abstandshalter 12 Belüftungsöffnungen mit eingesetzten Staubfiltern 13 aufweisen.

Um den Innenraum 9 der Außenfassade 4 reinigen bzw. die Sonnenschutzeinrichtungen 6 warten zu können, ist die innenseitige Glasscheibe 8 bei den Ausführungsformen nach Fig. 4 öffenbar ausgebildet.

Um eine noch höhere Wärmedämmung zum Fassadenzwischenraum 5 hin zu erreichen, kann die innenseitige Schale bzw. Scheibe 8 der Außenfassade 4 von Isolierglas gebildet sein, wie dies in den Teilfiguren b der Fig. 4 und 5 angedeutet ist.

Die Sonnenschutzeinrichtungen 6 sind in der Zeichnung jeweils als Jalousie angedeutet, können jedoch ebenso aus Raffstoren, Folienrollos oder ähnlichen Einrichtungen gebildet sein. Vorteilhaft ist, wenn sie an ihrer zur Fassadenaußenseite weisenden Fläche wahlweise die eingestrahlte Sonnenenergie absorbierend oder reflektierend ausgebildet ist, so daß eine Umstellung von Winterbetrieb auf Sommerbetrieb möglich ist. Dazu können die Sonnenschutzeinrichtungen 6 in in der Zeichnung nicht näher dargestellter Weise von zwei getrennten Folien gebildet sein, die wahlweise zur Anwendung kommen und deren eine die absorbierenden Eigenschaften aufweist, während die andere reflektierend ausgebildet ist.

Sind die Sonnenschutzeinrichtungen 6 dagegen - wie in der Zeichnung angedeutet - als Jalousie ausgebildet, besteht die Möglichkeit, durch Drehen der Lamellen wahlweise die eine oder die andere Seite zur Fassadenaußenseite hin zu richten. In diesem Fall kann die eine Seite die absorbierenden und die andere Seite die reflektierenden Eigenschaften aufweisen.

## Patentansprüche

1. Fassadenkonstruktion in zweischaliger Bauweise, mit einer Innenfassade (1), einer Außenfassade (4) sowie einem zwischen der Innen- und der Außenfassade (1, 4) liegenden Fassadenzwischenraum (5), wobei die mit transparenten Bereichen versehene Innenfassade (1) in Form einer Metallfassade, einer Ziegelwand mit Lochfenstern, einer Festverglasung, auch mit zu öffnenden Fenstern, ausgebildet und der Fassadenzwischenraum (5) mit Luft gefüllt bzw. von Luft durchströmt ist, sowie eine Sonnenschutzeinrichtung (6) vorgesehen ist, **dadurch gekennzeichnet, daß** die Außenfassade (4) ihrerseits wenigstens zweischalig ausgebildet ist, wobei die Sonnenschutzeinrichtungen (6) zwischen den Schalen der Außenfassade (4) angeordnet sind.

2. Fassadenkonstruktion nach Anspruch 1, **dadurch gekennzeichnet, daß** die Außenfassade (4) von die Sonnenschutzeinrichtungen (6) in sich aufnehmenden Glasscheiben (7, 8) gebildet ist, wobei die äußere Scheibe (7) aus Klarglas und die innere Scheibe (8) ebenfalls aus Klarglas oder aus Wärmeschutzglas besteht.

3. Fassadenkonstruktion nach Anspruch 2, **dadurch gekennzeichnet, daß** beide Glasscheiben (7, 8) als Isolierglas ausgebildet sind.

4. Fassadenkonstruktion nach einem der Ansprüche 1 bis 4, **dadurch gekennzeichnet, daß** die Lufteintritts- bzw. Luftaustrittsöffnungen (10) am unteren und oberen Rand der Glasscheiben (7, 8) vorgesehen sind.

5. Fassadenkonstruktion nach Anspruch 4, **dadurch gekennzeichnet, daß** die Lufteintritts- und/oder die Luftaustrittsöffnung (10) mit einem Ventilator (11) versehen ist.

6. Fassadenkonstruktion nach einem der Ansprüche 1 bis 3, **dadurch gekennzeichnet, daß** das von der die Außenfassade (4) bildenden Glasscheiben (7, 8) zwischen sich eingeschlossene Luftvolumen druckentspannt ist.

7. Fassadenkonstruktion nach Anspruch 6, **dadurch gekennzeichnet, daß** die die Außenfassade (4) bildenden Glasscheiben (7, 8) über Abstandshalter (12) beabstandet sind, wobei die Abstandshalter (12) Belüftungsöffnungen mit eingesetzten Staubfiltern (13) aufweisen.

8. Fassadenkonstruktion nach einem der Ansprüche 1 bis 7, **dadurch gekennzeichnet, daß** die innenseitige Glasscheibe (8) der Außenfassade (4) zu Reinigungs-, Reparatur- oder Revisionszwecken zu öffnen ist.

9. Fassadenkonstruktion nach einem der Ansprüche 6 bis 8, **dadurch gekennzeichnet, daß** die innenseitige Glasscheibe (8) der Außenfassade (4) als Isolierglasscheibe ausgebildet ist.

10. Fassadenkonstruktion nach einem der Ansprüche 1 bis 9, **dadurch gekennzeichnet, daß** die Sonnenschutzeinrichtungen (6) von Jalousien, Raffstoren, Folienrollos oder dergl. gebildet sind.

11. Fassadenkonstruktion nach einem der Ansprüche 1 bis 10, **dadurch gekennzeichnet, daß** die Sonnenschutzeinrichtungen (6) an ihrer zur Fassadenaußenseite weisenden Fläche wahlweise die eingestrahlte Sonnenenergie absorbierend oder reflektierend ausgebildet sind.

12. Fassadenkonstruktion nach Anspruch 11, **dadurch gekennzeichnet, daß** die Sonnenschutzeinrichtung (6) von zwei getrennten, wahlweise zur Anwendung kommenden Folien gebildet sind, deren eine die absorbierenden und deren andere die reflektierenden Eigenschaften aufweist.

13. Fassadenkonstruktion nach Anspruch 11, **dadurch gekennzeichnet, daß** die Sonnenschutzeinrichtungen (6) als Jalousie ausgebildet sind, die gewendet werden kann und deren eine Seite die absorbierenden und deren andere Seite die reflektierenden Eigenschaften aufweist.

## Claims

1. Double-walled structural façade element having an inner façade (1), an outer façade (4), and a space (5) between the inner and outer façades (1, 4), the inner façade (1) which is provided with transparent zones being configured as a metal facade, a brick wall with aperture windows, a fixed glazing unit, perhaps with opening lights, and the space between the façades being filled with air or traversed by air, and a sun-screening device (6) also being provided, **characterised in that** the outer façade (4) is, for its part, at least a double-walled construction, with the sun-screening devices (6) disposed between the walls of the outer façade (4).

2. Structural façade element according to claim 1, **characterised in that** the outer façade (4) is formed by glass panes (7, 8) which accommodate the sun-screening devices (6) within them, the outer pane (7) being made of clear glass and the inner pane (8) likewise being made of clear glass or thermally insulating glass.

3. Structural façade element according to claim 2, **characterised in that** both glass panes (7, 8) are configured as high-insulation glass.

4. Structural façade element according to any of claims 1 to 4, **characterised in that** the air inlet and air outlet openings (10) are provided on the bottom and top edges of the glass panes (7, 8).

5. Structural façade element according to claim 4, **characterised in that** the air inlet and/or the air outlet opening (10) is equipped with a ventilator (11).

6. Structural façade element according to any of claims 1 to 3, **characterised in that** the volume of air enclosed between them by the glass panes (7, 8) which form the outer façade (4) is pressure-relieved or balanced.

7. Structural façade element according to claim 6, **characterised in that** the glass panes (7, 8) constituting the outer façade (4) are held apart by means of spacers (12), the spacers (12) incorporating ventilation openings with dust filters (13) set in them.

8. Structural façade element according to any of claims 1 to 7, **characterised in that** the inner glass pane (8) of the outer façade (4) is adapted to be opened for cleaning, repair or adjustments.

9. Structural façade element according to any of claims 6 to 8, **characterised in that** the inner glass pane (8) of the outer façade (4) is constituted as a high-insulation glass pane.

10. Structural façade element according to any of claims 1 to 9, **characterised in that** the sun-screening devices (6) are constituted by venetian blinds, net curtains, roller blinds or the like.

11. Structural façade element according to any of claims 1 to 10, **characterised in that** on their surface facing towards the façade's exterior the sun-screening devices (6) are designed to alternately absorb or reflect the incident solar energy.

12. Structural façade element according to claim 11, **characterised in that** the sun-screening devices (6) are constituted by two separate sheets which are employed alternately, one of which exhibits the absorbent properties and the other the reflective properties.

13. Structural façade element according to claim 11, **characterised in that** the sun-screening devices (6) are configured as a venetian blind that can be turned, one side of which exhibits the absorbent properties and the other side of which exhibits the reflective properties.

## Revendications

1. Structure de façade du type à double paroi, comprenant une façade intérieure (1) et une façade extérieure (4), ainsi qu'un espace intermédiaire de façade (5) situé entre les façades intérieure (1) et extérieure (4), la façade intérieure (1) pourvue de zones transparentes se présentant sous la forme d'une façade métallique, d'un mur de briques percé de fenêtres individuelles, de paroi de verre, également avec des fenêtres ouvrantes, l'espace intermédiaire de façade (5) étant rempli avec de l'air ou étant parcouru par un écoulement d'air, et un dispositif de protection contre le soleil étant prévu, **caractérisée en ce que** la façade extérieure (4) comporte au moins deux parois, les dispositifs de protection contre le soleil (6) étant disposés entre les parois de la façade extérieure (4).

2. Structure de façade selon la revendication 1, **caractérisée en ce que** la façade extérieure (4) est formée de panneaux de verre (7, 8) qui contiennent le dispositif de protection contre le soleil (6), le panneau de verre extérieur (7) étant en vitre claire et le panneau de verre intérieur (8) étant en vitre claire ou en vitre thermiquement isolante.

3. Structure de façade selon la revendication 2, **caractérisée en ce que** les deux panneaux de verre (7, 8) sont conformés en vitrage isolant.

4. Structure de façade selon une des revendications 1 à 4, **caractérisée en ce que** l'ouverture ou les ouvertures d'entrée d'air (10) sont prévues au niveau des bords inférieur et supérieur des panneaux de verre (7, 8).

5. Structure de façade selon la revendication 4, **caractérisée en ce que** l'ouverture et/ou les ouvertures d'entrée d'air (10) sont pourvues d'un ventilateur (11).

6. Structure de façade selon une des revendications 1 à 3, **caractérisée en ce que** la pression du volume d'air enfermé entre les panneaux de verre (7, 8) formant la façade extérieure est détendue.

7. Structure de façade selon la revendication 6, **caractérisée en ce que** les panneaux de verre (7, 8) formant la façade extérieure sont espacés l'un de l'autre par des intercalaires (12), les intercalaires (12) étant pourvus d'ouvertures de ventilation avec des filtres anti-poussière (13) insérés dans celles-ci.

8. Structure de façade selon une des revendications 1 à 7, **caractérisée en ce que** le panneau de verre (8) intérieur de la façade extérieure (4) peut s'ouvrir à des fins de nettoyage, de réparation ou de révision.

9. Structure de façade selon une des revendications 6 à 8, **caractérisée en ce que** le panneau de verre (8) intérieur de la façade extérieure (4) est conformé en vitrage isolant.

10. Structure de façade selon une des revendications 1 à 9, **caractérisée en ce que** les dispositifs de protection contre le soleil (6) sont des stores vénitiens, des stores à lamelles, des stores à enrôulement ou analogues.

11. Structure de façade selon une des revendications 1 à 10, **caractérisée en ce que** les dispositifs de protection contre le soleil (6), au niveau de leur surface tournée vers la façade le panneau de verre (8), sont agencés soit pour absorber l'énergie solaire, soit pour réfléchir l'énergie solaire.

12. Structure de façade selon la revendication 11, **caractérisée en ce que** les dispositifs de protection contre le soleil (6) sont formés de deux feuilles distinctes, utilisées de manière sélective, parmi lesquelles l'une présente les propriétés absorbantes et l'autre les propriétés réfléchissantes.

13. Structure de façade selon la revendication 11, **caractérisée en ce que** les dispositifs de protection contre le soleil (6) sont conformés en store vénitien, qui peut être tourné et dont une face présente les propriétés absorbantes et l'autre les propriétés réfléchissantes.
